# DEMANDE DE BREVET EUROPEEN

(11) **EP 1 704 765 A1**
(43) Date de publication de la demande: **27.09.2006**
(21) Numéro de dépôt: 06111389.0
(22) Date de dépôt: 20.03.2006
(51) Int. Cl.: A01C 15/08, A01C 17/00, B65D 88/68

(54) **Dispositif de montage et de réglage d'un doigt agitateur pour un distributeur d'engrais**

(30) Priorité: 21.03.2005 FR 0502785
(71) Demandeur: SULKY-BUREL S.A.S, 35220 Chateaubourg (FR)
(72) Inventeur: Leveille, Lionel, 35220 Saint-Didier (FR)
(74) Mandataire: Guéné, Patrick Lucien Juan Joseph

(57) **Abrégé**

L'invention concerne un agitateur d'un produit contenu dans une trémie facilitant l'écoulement par gravité du produit par une ouverture se trouvant au fond de la trémie, ledit agitateur comprenant un doigt d'agitation (1) solidarisé à un arbre d'entraînement (2), ledit arbre d'entraînement (2) transmettant au doigt d'agitation (1) un mouvement oscillant autour d'une position moyenne.

Selon l'invention, cet agitateur permet un premier réglage de l'extrémité (13) du doigt d'agitation selon une direction sensiblement perpendiculaire à l'axe de l'arbre d'entraînement (2) de façon à régler précisément sa position par rapport à l'ouverture.

## Description

### 1. Domaine de l'invention

Le domaine de l'invention est celui de la distribution par écoulement de produit en grains, par exemple les distributeurs d'engrais.

Plus précisément, l'invention concerne un dispositif d'agitateur présent dans la trémie d'un tel épandeur, destiné à faciliter et/ou optimiser l'écoulement de son contenu, engrais ou semi par exemple.

### 2. Solutions de l'art antérieur

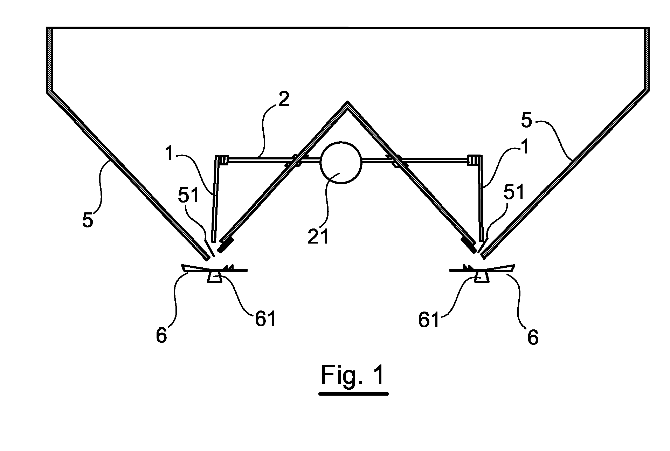

La distribution de produit en vrac, et notamment de l'engrais, sur les terres agricoles est généralement faite par des épandeurs centrifuges attelés sur des tracteurs agricoles. Une vue en coupe simplifiée d'un tel épandeur est représentée par la figure 1, qui représente l'art antérieur.

Ces épandeurs sont généralement constitués d'une ou de plusieurs trémies 5 contenant l'engrais à épandre. Des disques d'épandage 6 sont situés à l'aplomb de la sortie 5 des trémies.

Les trémies 5 comportent chacune des ouvertures 51 qui permettent à l'engrais de tomber par gravité sur les disques d'épandage 6. Les disques d'épandage 6 sont entraînés en rotation par des moyens d'entraînement 61 et projettent l'engrais versé sur les disques 6 aux alentours sous la forme d'une nappe d'épandage, en utilisant la force centrifuge.

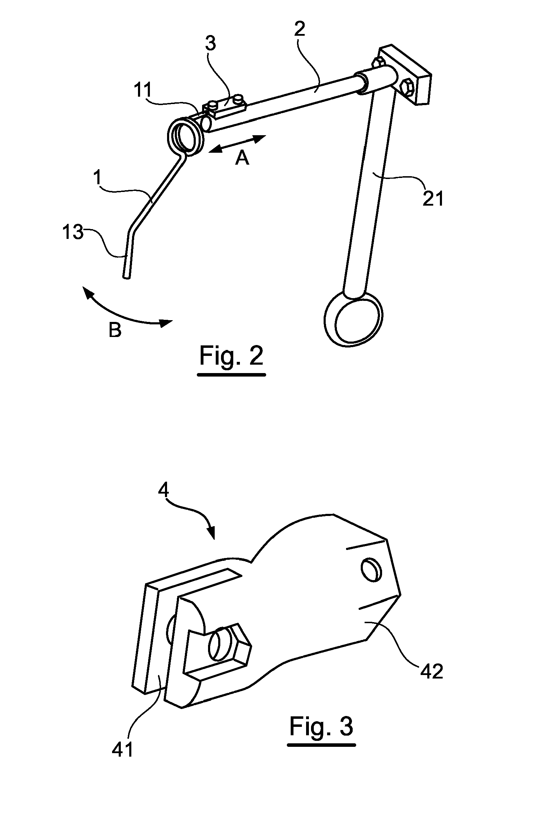

Pour favoriser un écoulement continu du contenu de la trémie vers l'ouverture 51 de cette dernière, il a été ajouté dans celle-ci un système d'agitation. Un système d'agitation classiquement utilisé est représenté par la figure 2, qui représente l'art antérieur. Ce système d'agitation comprend un doigt d'agitation oscillant 1, monté dans chaque trémie de façon à ce que l'extrémité du doigt 1 se trouve au-dessus de l'ouverture 51.

Le doigt d'agitation est lié à un arbre de transmission 2, lui-même lié à un moyen d'entraînement 21 qui lui transmet un mouvement de va-et-vient rotatif. Ce mouvement de va-et-vient rotatif est transmis aux doigts d'agitation 1, dont l'extrémité 13 se déplace alors sur des arcs de cercle centrés sur l'axe de l'arbre d'entraînement. Un tel système d'agitation est notamment décrit dans le document de brevet EP 0 225 836 au nom de la demanderesse.

Le doigt d'agitation 1 comprend une portion d'attache 11 destinée à être sensiblement parallèle à l'arbre 2. L'assemblage du doigt d'agitation 1 à l'arbre d'entraînement 2 se fait alors par serrage de la portion d'attache 11 contre l'arbre 2, par le biais d'un mécanisme de liaison 3. Le mécanisme de liaison 3 permet de régler la position horizontale du doigt d'agitation 1 suivant la direction indiquée par la flèche A,en serrant la portion d'attache 11 du doigt d'agitation 1 plus ou moins près de l'extrémité de l'arbre 2. Il est également possible de régler la position angulaire du doigt d'agitation 1 suivant la flèche B, en agissant sur l'arbre 2 de transmission 2 avec le moyen d'entraînement 21. Ce réglage de la position du doigt d'agitation 1 est essentiel. En effet, dans le cas des épandeurs centrifuges à deux trémies, il faut que les doigts d'agitation des deux trémies soient réglés précisément de la même façon pour que les deux trémies déversent exactement la même quantité de produit. Ce réglage est primordial pour pouvoir répartir l'engrais de façon régulière sur la surface agricole.

### 3. Inconvénients de l'art antérieur

La technique connue de l'art antérieur ne permet d'effectuer ce réglage que de façon imparfaite. En effet, le doigt d'agitation ne peut être réglé que suivant deux directions représentées par les flèches A et B de la figure 1.

De plus, le mécanisme de liaison 3 permettant le serrage de la portion d'attache 11 du doigt d'agitation 1 sur l'arbre 2 est d'utilisation assez complexe. En effet, il comprend de nombreux éléments et nécessite pour chaque réglage de nombreuses opérations de vissage et de dévissage.

En outre, les réglages effectués doivent être souvent vérifiés par l'opérateur de la machine agricole. En effet, cette dernière étant soumise à de nombreux chocs et à de nombreuses vibrations, les valeurs de réglage sont fréquemment soumises à des variations intempestives en phase de travail dans le champ.

### 4. Objectifs de l'invention

L'invention a notamment pour objectif de pallier ces inconvénients de l'art antérieur.

Plus précisément, un objectif de l'invention est de fournir une pièce de liaison permettant le montage d'un doigt d'agitation sur un arbre dans la trémie d'un épandeur d'engrais, qui permette un réglage particulièrement facile et précis de la position du doigt d'agitation.

Un objectif essentiel de l'invention est notamment de permettre à l'utilisateur de régler la position du doigt d'agitation dans différentes directions en un point unique.

Un autre objectif de l'invention est de fournir une telle pièce qui évite tout risque de déréglage en phase de travail.

Un objectif supplémentaire de l'invention est de fournir une pièce permettant un réglage dans une autre direction que celles définies par les flèches AetB.

Un autre objectif de l'invention est de fournir une pièce qui soit plus fiable car impliquant moins d'éléments.

Encore un autre objectif de l'invention est de fournir une telle pièce qui soit facile à fabriquer et peu coûteuse.

### 5. Caractéristiques essentielles de l'invention

Ces objectifs, ainsi que d'autres qui apparaîtront par la suite, sont atteints à l'aide d'un agitateur d'un produit contenu dans une trémie facilitant l'écoulement par gravité de ce produit par une ouverture se trouvant au fond de la trémie, l'agitateur comprenant un doigt d'agitation solidarisé à un arbre d'entraînement, l'arbre d'entraînement transmettant au doigt d'agitation un mouvement oscillant autour d'une position moyenne, tel que l'extrémité dudit doigt se déplace sur un arc de cercle, centré sur l'axe de l'arbre d'entraînement.

Selon l'invention, un tel agitateur permet un premier réglage de l'extrémité du doigt d'agitation selon une direction C sensiblement perpendiculaire à l'axe de l'arbre d'entraînement de façon à régler précisément sa position par rapport à l'ouverture.

La position en hauteur de l'extrémité de l'agitateur au-dessus de l'ouverture e la trémie peut donc être ajustée, ce qui permet de régler l'efficacité de l'agitation.

Avantageusement, il permet un second réglage de la position de l'extrémité du doigt d'agitation selon une direction parallèle à l'axe de l'arbre.

De façon préférentielle, il permet un troisième réglage de l'angle formé entre le doigt d'agitation dans la position moyenne et la verticale.

Ces réglages permettre de régler la position de l'agitateur au dessus de l'ouverture de la trémie.

Selon un mode de réalisation préférentiel de l'invention, une pièce de liaison unique assurant la solidarisation du doigt à l'arbre permet les premier, deuxième et troisième réglages.

Le réglage de la position du doigt d'agitation est donc considérablement facilité.

Avantageusement, la pièce de liaison comprend une fente de blocage destinée à recevoir au moins une partie d'une dent de fixation du doigt d'agitation pour la bloquer par serrage.

Ce mode de réalisation permet de réaliser de façon aisée le réglage en hauteur de la position du doigt d'agitation.

Selon un mode de réalisation avantageux, le serrage de la dent de fixation est assuré par un ensemble vis-écrou et/ou un levier de serrage.

Préférentiellement, la pièce de liaison comprend un fourreau destiné recevoir l'extrémité de l'arbre d'entraînement.

Ce fourreau permet de réaliser simultanément les deuxième et troisième réglages de la position du doigt d'agitation.

Selon un mode de réalisation particulier de l'invention, le fourreau est apte à recevoir des moyens de serrage (5, 51) pouvant collaborer avec au moins un méplat (22) dudit doigt d'entraînement (2), pour modifier et verrouiller l'inclinaison dudit arbre (2) à l'intérieur dudit fourreau (42).

Ces moyens de serrage permettent ainsi un réglage particulièrement précis de la position du doigt d'agitation.

Préférentiellement, le doigt d'agitation solidarisé au bras d'entraînement au moyens de la fente (41) est choisi parmi au moins deux doigts d'agitation ayant des propriétés différentes.

L'utilisateur pourra ainsi, de façon très facile, changer de doigt d'agitation en fonction, par exemple, du produit qu'il doit épandre.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente l'art antérieur à l'invention et a été commentée ci-dessus ; elle présente une vue en coupe simplifiée d'un épandeur centrifuge d'engrais comprenant deux trémies ;
- la figure 2 présente un système d'agitation selon l'art antérieur, et a également été commentée ci-dessus ;
- la figure 3 illustre une pièce de liaison du doigt d'agitation sur l'arbre d'entraînement selon l'invention ;
- la figure 4 donne un schéma de montage du doigt d'agitation sur l'arbre d'entraînement au moyen d'une pièce de liaison selon la figure 3.
- la figure 5 présente un système d'agitation suivant l'invention ;
- la figure 6 illustre un arbre d'entraînement selon l'invention ;
- la figure 7 présente une autre vue de la pièce de liaison de la figure 3 ;
- la figure 8 présente une autre vue du système d'agitation de la figure 5.

### 6. Description détaillée de l'invention

### 6.1 Rappel du principe de l'invention

L'invention propose donc une technique de réglage nouvelle et inventive d'un agitateur placé dans la trémie d'un épandeur d'engrais, permettant un réglage fiable et très précis de la position du doigt d'agitation suivant trois directions, au moyen d'une pièce de liaison unique.

### 6.2 Description d'un mode de réalisation

Un agitateur de distributeur d'engrais comporte classiquement un doigt d'agitation 1 qui est solidarisé à un arbre d'entraînement 2. Selon l'invention, cette solidarisation est assurée par une pièce de liaison unique 4, telle que représentée sur la figure 3.

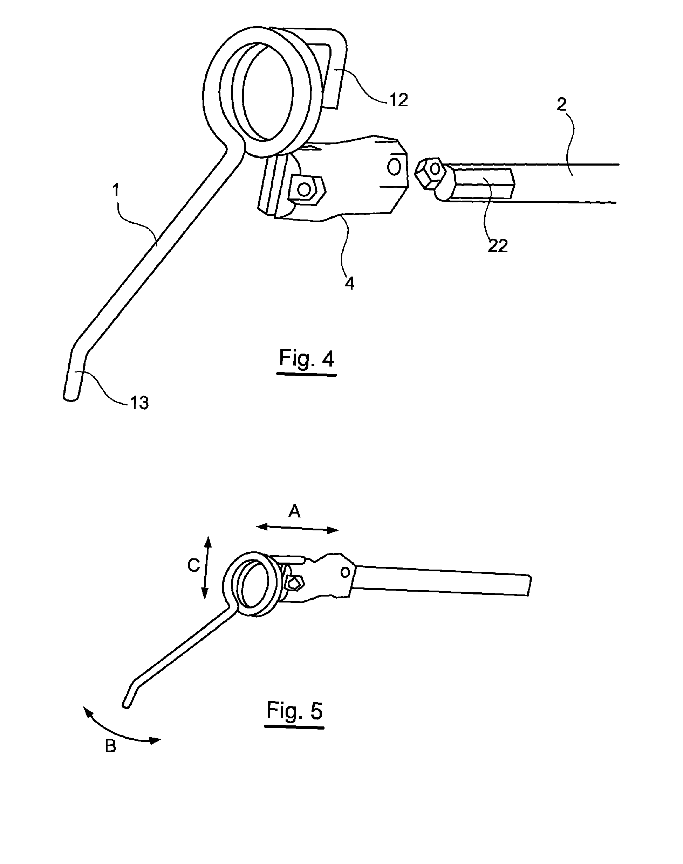

Cette pièce de liaison 4 maintient efficacement le doigt d'agitation grâce à une fente de blocage 41 assurant son réglage et/ou son verrouillage. Comme le représente la figure 4, la portion d'attache 11 du doigt d'agitation 1 selon l'invention comporte en effet un embout 12. Cet embout 12, qui est sensiblement parallèle à l'extrémité du doigt d'agitation 1, vient s'enficher dans la fente de blocage 41. Un système de serrage, qui peut être par exemple un système vis écrou ou un système classique de serrage à levier, vient alors rapprocher les deux cotés de la fente de blocage 41, en bloquant solidement l'embout 12.

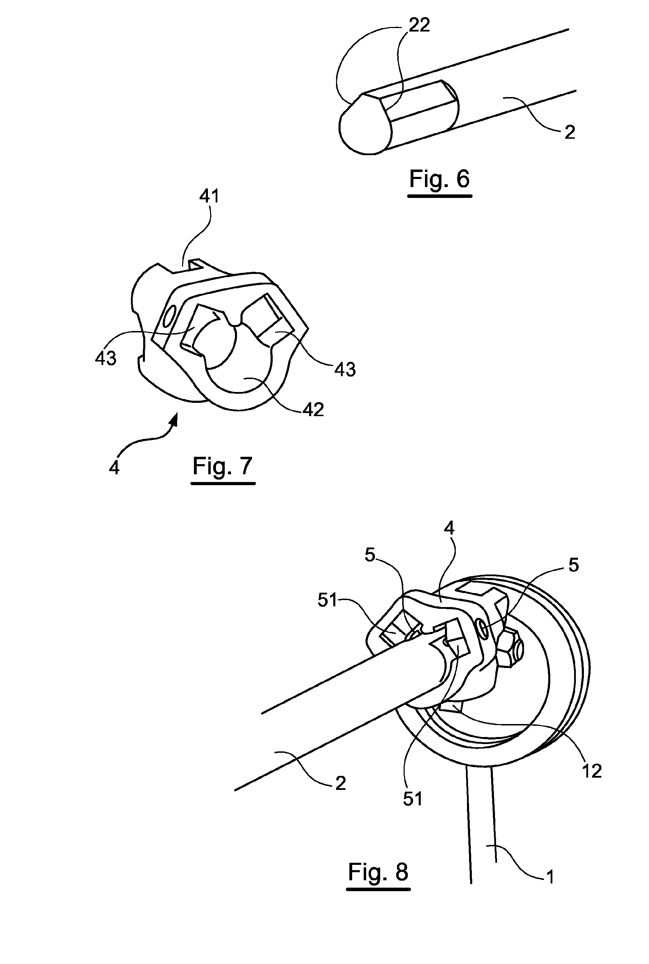

La deuxième partie de la pièce de liaison 4 forme un fourreau 42 adapté pour venir s'emmancher sur l'extrémité de l'arbre d'entraînement 2. Selon un mode de réalisation particulier de l'invention, représenté par les figures 4, 6, 7 et 8 l'extrémité de l'arbre 2 comporte au moins deux méplats 22.

Dans le fourreau 42, deux logements 43 sont prévus pour recevoir deux écrous 51. Deux vis 5 sont vissées dans ces écrous, et viennent en appui contre les méplats 22 de l'arbre 2, pour assurer le serrage de l'arbre 2 sur le fourreau 42. Ces vis peuvent être actionnées depuis la partie extérieure du fourreau 42.

Les axes de ces vis 5 sont excentrés par rapport à l'axe de l'arbre 2 d'entraînement 2. Le vissage et le dévissage de ces vis sur les méplats 22 permettent donc de modifier l'angle que forme la pièce de liaison 4 avec l'arbre d'entraînement 2. L'utilisateur peut donc, en agissant sur ces vis 5, ajuster la position de l'extrémité 13 de la dent d'agitation 1 suivant la direction représenté par la flèche B de la figure 5.

L'utilisateur peut également enfoncer plus ou moins le fourreau 42 sur l'arbre 2, ce qui entraîne un ajustement de la position de l'extrémité de la dent selon la direction indiquée par la flèche A.

Dans le mode de réalisation présenté, les serrages se font à l'aide de vis. Il est bien entendu que n'importe quel autre moyen de serrage connu de l'homme du métier peut être utilisé comme variante de ce mode de réalisation préféré de l'invention.

Enfm, l'utilisateur a désormais la possibilité de faire varier l'enfoncement de l'embout 12 du doigt d'agitation 1 dans la fente 41, ce qui a pour effet de faire varier la position de l'extrémité du doigt d'agitation selon la direction indiquée par la flèche C.

L'utilisateur peut donc régler d'une façon particulièrement précise et facile la position de l'extrémité 13 de la dent, tous les réglages suivant les 3 directions A, B et C étant en outre centralisés sur une seule pièce, laquelle, du fait notamment de sa forme et de sa conception permet également d'éviter des dérèglements intempestifs de la position du doigt d'agitateur de la trémie, face aux vibrations et chocs subis par cette dernière, lorsque la machine agricole est en phase de travail dans un champ.

## Revendications

1. Agitateur d'un produit contenu dans une trémie (5) facilitant l'écoulement par gravité dudit produit par une ouverture (51) se trouvant au fond de ladite trémie (5), ledit agitateur comprenant un doigt d'agitation (1) solidarisé à un arbre d'entraînement (2), ledit arbre d'entraînement transmettant audit doigt d'agitation (1) un mouvement oscillant autour d'une position moyenne.
**caractérisé en ce qu'**il permet un premier réglage de l'extrémité dudit doigt d'agitation (1) selon une direction sensiblement perpendiculaire à l'axe dudit arbre d'entraînement (2) de façon à régler précisément sa position par rapport à ladite ouverture (51).

2. Agitateur selon la revendication 1, **caractérisé en ce qu'**il permet un second réglage de la position de ladite extrémité dudit doigt d'agitation (1) selon une direction parallèle à l'axe dudit arbre (2).

3. Agitateur selon l'une quelconque des revendications 1 et 2, **caractérisé en ce qu'**il permet un troisième réglage de l'angle formé entre ledit doigt d'agitation (1) dans ladite position moyenne et la verticale.

4. Agitateur selon les revendications 1, 2 et 3, **caractérisé en ce qu'**une pièce de liaison unique (4) assurant la solidarisation dudit doigt audit arbre permet lesdits premier, deuxième et troisième réglages.

5. Agitateur selon la revendication 4, **caractérisé en ce que** ladite pièce de liaison (4) comprend une fente de blocage (41) destinée à recevoir au moins une partie d'une dent de fixation (12) dudit doigt d'agitation (1) pour la bloquer par serrage.

6. Agitateur selon la revendication 5, **caractérisé en ce que** le serrage de ladite dent de fixation (12) est assuré par un ensemble vis-écrou et/ou un levier de serrage.

7. Agitateur selon l'une quelconque des revendications 4 à 6, **caractérisé en ce que** ladite pièce de liaison (4) comprend un fourreau (42) destiné recevoir l'extrémité dudit arbre d'entraînement (2).

8. Agitateur selon la revendication 7, **caractérisé en ce que** ledit fourreau (42) est apte à recevoir des moyens de serrage (5, 51) pouvant collaborer avec au moins un méplat (22) dudit doigt d'entraînement (2), pour modifier et verrouiller l'inclinaison dudit arbre (2) à l'intérieur dudit fourreau (42).

9. Agitateur selon l'une quelconque des revendications 1 à 8, **caractérisé en ce que** ledit doigt d'agitation (1) solidarisé audit arbre d'entraînement (2) au moyen de la fente de blocage (41) est choisi parmi au moins deux doigts d'agitation ayant des propriétés différentes.
